# EUROPEAN PATENT APPLICATION

(11) **EP 3 220 345 A1**
(43) Date of publication of application: **20.09.2017**
(21) Application number: 15858746.9
(22) Date of filing: 10.11.2015
(51) Int. Cl.: G06Q 50/26, G01C 21/26, G08B 27/00, G08G 1/00

(54) **EVACUATION PREDICTION SYSTEM, MODEL GENERATING DEVICE, PREDICTION DEVICE, EVACUATION PREDICTION METHOD, AND COMPUTER-READABLE RECORDING MEDIUM**

(30) Priority: 14.11.2014 JP 2014231389
(71) Applicant: NEC Corporation, Tokyo 108-8001 (JP)
(72) Inventor: TADANO, Kumiko, Tokyo 108-8001 (JP)
(74) Representative: Vossius & Partner Patentanwälte Rechtsanwälte mbB
(86) International application number: PCT/JP2015/005614
(87) International publication number: WO 2016/075933

(57) **Abstract**

The main purpose is to provide an evacuation prediction system, etc. that can estimate the time required for the evacuation of disaster victims in accordance with situations in a road network, etc. serving as an evacuation route.

An evacuation prediction system according to an embodiment of the present invention includes prediction means for predicting time required for an evacuee to evacuate based on evacuation information relating to an evacuation route for the evacuee and recovery information relating to recovery timing at a trouble occurrence site that is a site where a trouble occurred on the evacuation route.

## Description

### [Technical Field]

The present invention relates to an evacuation prediction system, a model generating device, a prediction device, an evacuation prediction method, and a computer-readable recording medium.

### [Background Art]

When a disaster occurs, there is a possibility that disaster victims who have suffered from the disaster are forced to evacuate from an area hit by the disaster. In such a case, it is desirable that the time required for the disaster victims who are required to evacuate (hereinafter referred to as "evacuees") to complete evacuation be as short as possible.

On the other hand, when a disaster occurs, a road network and the like that serve as evacuation paths sometimes suffer from the disaster and a road fault may occur. In this case, there is a possibility that the evacuation paths becomes unable to pass. Therefore, when an evacuation plan for evacuees is drawn up, there may be a case such that the state of damages and a recovery plan relating to the evacuation paths need to be considered. In addition, when a road network and the like that serve as evacuation paths are damaged by a disaster, there may be a case such that a recovery plan from a road fault having occurred to the road network and the like need to be drawn up so that the time required for disaster victims to evacuate becomes short.

In PTL 1, an evacuation plan evaluation system and the like are disclosed. In the evacuation plan evaluation system disclosed in PTL 1, a support-requiring person count calculation unit calculates the number of persons who need support in evacuation based on attribute information of users of mobile terminals. In addition, an evacuation destination-classified evacuee count calculation unit calculates the number of evacuees who evacuate to their homes and an evacuation center. Furthermore, a simulation unit simulates for a case in which evacuees evacuate to their homes and the evacuation center from respective polygonal regions. Subsequently, a score calculation unit calculates scores for an evacuation plan based on the number of persons who need support, the number of evacuees, and a simulation result.

In PTL 2, a data processing device that is capable of predicting a destination even when there is a loss of current position data that are acquired in real time, is disclosed.

In PTL 3, an evacuation time prediction device that predicts evacuation time from a multistory building with stairs is disclosed.

### [Citation List]

### [Patent Literature]

[PTL 1] Japanese Unexamined Patent Application Publication Laid-open No. 2012-83908 A
[PTL 2] Japanese Unexamined Patent Application Publication Laid-open No.2012-108748 A
[PTL 3] Japanese Unexamined Patent Application Publication Laid-open No. 2012-27560 A

### [Summary of Invention]

### [Technical Problem]

In the evacuation plan evaluation system and others disclosed in PTL 1, a recovery plan for a case in which a road network and the like that serve as evacuation paths have suffered from a disaster is not necessarily taken into consideration. That is, with regard to the evacuation plan evaluation system disclosed in PTL 1, there may be a case such that it is difficult to estimate the time required for disaster victims to evacuate in accordance with the conditions of a road network and the like that serve as evacuation paths.

The present invention is accomplished to solve the above-described problem, and a principal object of the present invention is to provide an evacuation prediction system that may estimate the time required for disaster victims to evacuate in accordance with the conditions and the like of a road network and the like that serve as evacuation paths.

### [Solution to Problem]

An evacuation prediction system in one aspect of the present invention includes prediction means for predicting time required for an evacuee to evacuate based on evacuation information relating to an evacuation route for the evacuee and recovery information relating to recovery timing at a trouble occurrence site that is a site where a trouble occurred on the evacuation route.

An evacuation prediction method in one aspect of the present invention includes predicting time required for an evacuee to evacuate based on evacuation information relating to an evacuation route for the evacuee and recovery information relating to recovery timing at a trouble occurrence site that is a site where a trouble occurred on an evacuation route.

A computer-readable recording medium in one aspect of the present invention non-transitorily storing a program causing a computer to execute: a process of predicting time required for an evacuee to evacuate based on evacuation information relating to an evacuation route for the evacuee and recovery information relating to recovery timing at a trouble occurrence site that is a site where a trouble occurred on an evacuation route.

### [Advantageous Effects of Invention]

According to the present invention, an evacuation prediction system and the like that may estimate the time required for disaster victims to evacuate in accordance with the recovery status and the like of a road network and the like that serve as evacuation paths may be provided.

### [Brief Description of Drawings]

[Fig. 1] Fig. 1 is a diagram illustrating a configuration of an evacuation prediction system in a first example embodiment of the present invention;
[Fig. 2] Fig. 2 is a diagram illustrating an example of evacuation paths and others which the evacuation prediction system in the first example embodiment of the present invention deals with;
[Fig. 3] Fig. 3 is a diagram illustrating an example of evacuation information and recovery information that the evacuation prediction system in the first example embodiment of the present invention receives;
[Fig. 4] Fig. 4 is a flowchart illustrating an operation of the evacuation prediction system in the first example embodiment of the present invention;
[Fig. 5] Fig. 5 is a diagram illustrating a configuration of an evacuation prediction system in a second example embodiment of the present invention;
[Fig. 6] Fig. 6 is a diagram illustrating an example of generation rules that are used when the evacuation prediction system in the second example embodiment of the present invention generates a model;
[Fig. 7] Fig. 7 is a diagram illustrating an example of a model that the evacuation prediction system in the second example embodiment of the present invention generates;
[Fig. 8] Fig. 8 is a diagram illustrating an example of a cumulative distribution function that represents the time required for evacuees to evacuate, which time is predicted by the evacuation prediction system in the second example embodiment of the present invention; and
[Fig. 9] Fig. 9 is a diagram illustrating an example of an information processing device that achieves the evacuation prediction systems in the respective example embodiments of the present invention.

### [Description of Embodiments]

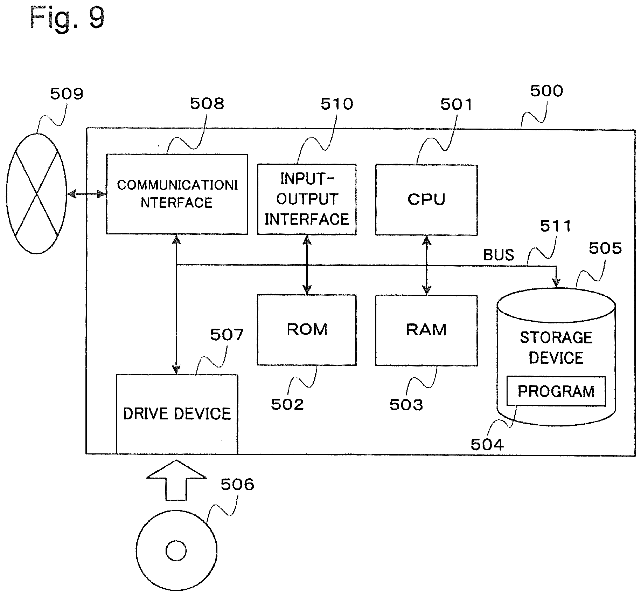

Respective example embodiments of the present invention will be described with reference to the accompanying drawings. In the respective example embodiments of the present invention, each component in respective devices exhibits a block in a functional unit. Each component in the respective devices may be implemented by any combination of, for example, an information processing device 500 as illustrated in Fig. 9 and software. As an example, the information processing device 500 includes a configuration as described below.

- A CPU (Central Processing Unit) 501
- ROM (Read Only Memory) 502
- RAM (Random Access Memory) 503
- A program 504 loaded into the RAM 503
- A storage device 505 storing the program 504
- A drive device 507 reading and writing from/to a storage medium 506
- A communication interface 508 connecting to a communication network 509
- An input-output interface 510 inputting and outputting of data
- A bus 511 connecting the respective components Methods for implementing the respective devices include various modifications. For example, each device may be achieved as a dedicated device. Each device may also be implemented by a combination of a plurality of devices.

In the drawings illustrating the configurations of respective devices and respective systems, the directions of arrows in the drawings only illustrate an example and do not limit the directions of signals exchanged among the components.

### (First Example Embodiment)

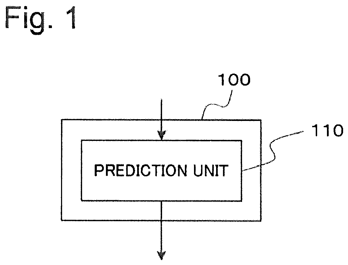

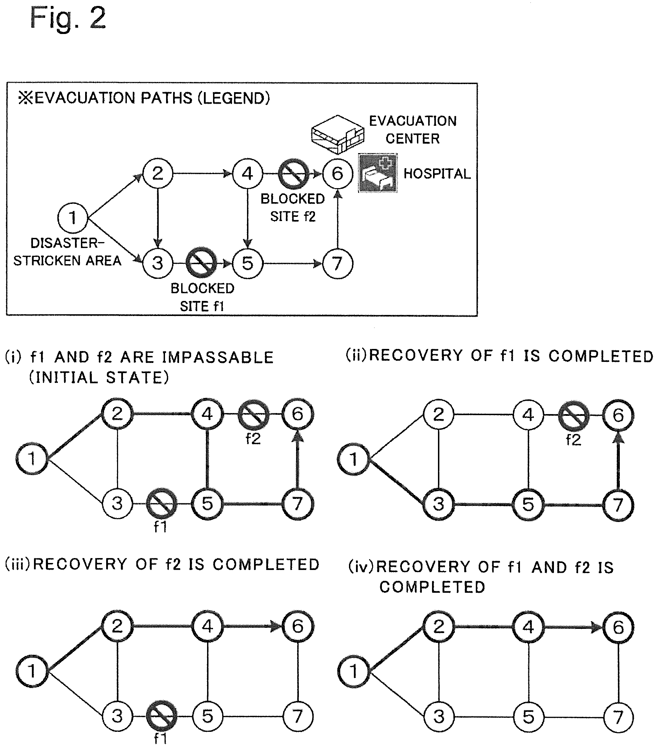

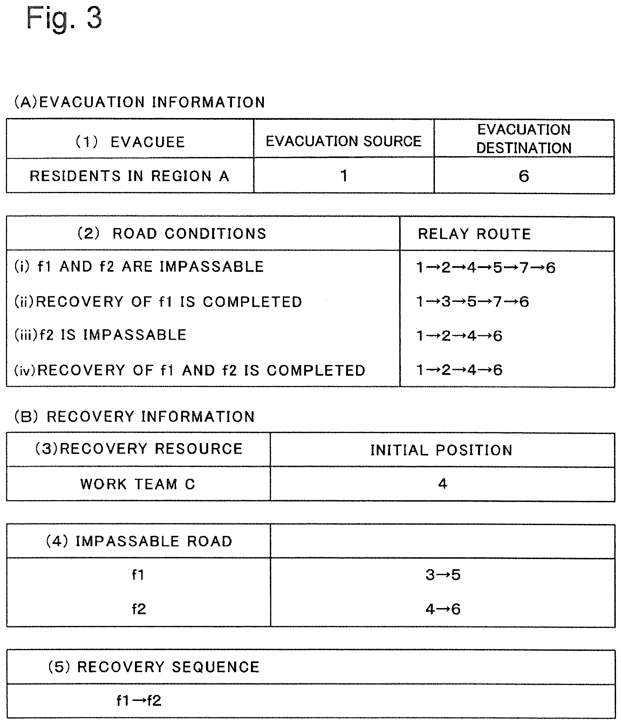

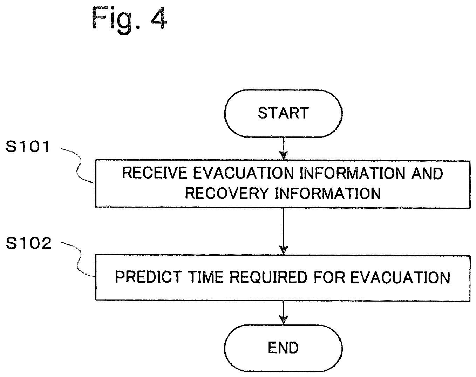

First, a first example embodiment of the present invention will be described. Fig. 1 is a diagram illustrating an evacuation prediction system in the first example embodiment of the present invention. Fig. 2 is a diagram illustrating an example of evacuation paths and the like which the evacuation prediction system in the first example embodiment of the present invention deals with. Fig. 3 is a diagram illustrating an example of evacuation information and recovery information that the evacuation prediction system in the first example embodiment of the present invention receives. Fig. 4 is a flowchart illustrating an operation of the evacuation prediction system in the first example embodiment of the present invention.

As illustrated in Fig. 1, an evacuation prediction system 100 in the first example embodiment of the present invention includes a prediction unit 110 that predicts time required for evacuees to evacuate based on evacuation information relating to evacuation paths for the evacuees and recovery information relating to recovery timing at a site where a trouble occurred in the evacuation paths.

When a disaster occurs, evacuees evacuate from a disaster-stricken area depending on situations. When the evacuees evacuate, if a trouble occurred in an evacuation path, the time required for evacuation may vary depending on the trouble. In the present example embodiment, the prediction unit 110 included in the evacuation prediction system 100 may predict the time required for the evacuees to evacuate in accordance with the status of recovery from the trouble by using not only the evacuation information but also the recovery information.

The evacuation prediction system 100 in the present example embodiment may predict, as an example, the time required for evacuation in units of individuals who are required to evacuate. However, the evacuation prediction system 100 in the present example embodiment may predict the time required for evacuation in units of groups of evacuees instead of individuals. For example, a group of individuals who are required to evacuate in a local area may be treated as the unit in predicting the time required for evacuation using the evacuation prediction system 100 in the present example embodiment. The evacuation prediction system 100 in the present example embodiment may also predict the time required for evacuation with respect to each group of evacuees who have any given attribute, such as the injured, the sick, and persons engaging in a specific profession.

In the present example embodiment, an evacuation route is, for example, a route from an evacuation origin to an evacuation destination. The evacuation origin and the evacuation destination are appropriately determined based on actual situations of evacuation and others. The evacuation route may be changed depending on a trouble occurrence and the status of recovery therefrom.

Fig. 2 illustrates an example of evacuation paths and evacuation routes related to the status of recovery from a disaster. In Fig. 2, numbers 1 to 6 each of which is surrounded by a circle and serves as a node represent geographical positions at which evacuees may stay. When a road network and others exists between the numbers surrounded by circles, both areas corresponding to the numbers are connected to each other by a link represented by an arrow in the drawing.

In the example illustrated in Fig. 2, first, referring to a legend enclosed by a frame, a case is assumed where evacuees are staying in an area corresponding to a node with the number 1 and are to evacuate to an area corresponding to a node with the number 6. It is assumed that a trouble f1 exists between an area corresponding to a node with the number 3 and an area corresponding to a node with the number 5 and thus a path therebetween is impassable. It is also assumed that a trouble f2 exists between an area corresponding to a node with the number 4 and an area corresponding to a node with the number 6 and thus a path therebetween is impassable.

In this case, as illustrated by thick lines in the respective Fig. 2(i) to Fig. 2(iv), an evacuation route for the evacuees is changed in accordance with the status of recovery from the troubles, for example, as described below. The evacuation route at the beginning is determined as 1→2→4→5→7→6, as illustrated in Fig. 2(i). When recovery of f1 is completed, the evacuation route is changed to 1→3→5→7→6, as illustrated in Fig. 2(ii). When recovery of f2 is completed, the evacuation route is changed to 1→2→4→6, as illustrated in Fig. 2(iii). When recovery of both f1 and f2 is completed, the evacuation route is set to 1→2→4→6, as illustrated in Fig. 2 (iv). The evacuation prediction system 100 in the present example embodiment predicts the time required for the evacuees to evacuate based on such changes in the evacuation route.

In the present example embodiment, the recovery information is information relating to a timing at which, for example, a site where a trouble that makes passing therethrough impossible has occurred (hereinafter referred to as "trouble occurrence site") is to be recovered, when such the trouble occurrence site exists on the evacuation paths for the evacuees. When a plurality of trouble occurrence sites exist in the evacuation paths, for example, the recovery information includes recovery timings at the respective trouble occurrence sites and a sequence of recovery of the respective trouble occurrence sites. The recovery information may also include an initial position and other information of a resource for recovery.

In one example, the time required for evacuation, which is to be predicted, is the time required for all the evacuees to complete evacuation in the present example embodiment. To complete evacuation denotes that, for example, the evacuees reach an evacuation destination. However, the time required for evacuation, which is to be predicted, is not limited to the time as described above, and may be the time required for a predetermined group of evacuees to complete the evacuation or the time required for the evacuees to reach a predetermined area that is located on a route to the evacuation destination, for example.

A recovery timing from a trouble and travel time of the evacuees included in the recovery information are represented in any form. As an example, these types of time may be represented in the form of any kinds of distribution. These types of time are also represented in such a way as to indicate a specific timing, such as certain hours later or at a specific time on a specific day. In addition, the time required for the evacuees to evacuate and other time are represented by, for example, a cumulative distribution function.

As an example, the evacuation prediction system 100 acquires information illustrated in Fig. 3 and predicts the time required for the evacuees to evacuate in the present example embodiment. In Fig. 3, Fig. 3 (A) and Fig. 3 (B) illustrate the evacuation information and the recovery information, respectively.

The evacuation information illustrated in Fig. 3 (A) includes evacuees for whom the time required for evacuation is to be predicted, information relating to an evacuation origin and an evacuation destination for the evacuees, and an evacuation route (a relay route) that the evacuees pass in accordance with the status of recovery in the evacuation paths. The evacuation information also includes information relating to the time required for evacuation which is not illustrated, such as transit time to pass each evacuation path, the number of evacuees whom each area is capable of accommodating, and the capacity of each evacuation path (for example, the number of persons who are able to pass per unit of time). The recovery information illustrated in Fig. 3 (B) includes an initial position of a recovery resource, a site that is impassable because of a trouble occurrence, and a sequence of recovery from the trouble. The recovery information also includes information relating to changes in the time required for evacuation, which is not illustrated, such as changes in the time required to pass each evacuation path and changes in the capacity of each evacuation path, depending on information relating to the trouble.

Next, using Fig. 4, an example of an operation of the evacuation prediction system 100 in the present example embodiment will be described. The prediction unit 110 first receives the evacuation information and the recovery information (step S101). The prediction unit 110 receives the evacuation information and the recovery information in such a form as illustrated in the above-described Fig. 3, for example. The prediction unit 110 may also receive such information via any inputting means and the like. The prediction unit 110 may also use information stored in any storage means in advance, such as a memory and a disk. The prediction unit 110 may also receive such information via a communication network.

Subsequently, the prediction unit 110 predicts the time required for evacuation (step S102). The prediction unit 110 may predict the time required for evacuation by generating an analysis model based on the information acquired in step S101 and analyzing the analysis model, for example. A result of prediction predicted by the prediction unit 110 is output from any outputting means, including, a display device and other devices, or a communication network, for example. The result of the prediction predicted by the prediction unit 110 may be stored in any storage means so as to be referenced when it is needed.

As described thus far, the evacuation prediction system 100 in the present example embodiment predicts the time required for evacuees to evacuate based on the evacuation information relating to evacuation paths for the evacuees and the recovery information relating to recovery timing at a site in the evacuation paths where a trouble has occurred. The time required for the evacuees to evacuate may change depending on conditions of the evacuation paths. In the present example embodiment, the evacuation prediction system 100 in the present example embodiment may predict the time required for the evacuees to evacuate in accordance with the status of recovery of the evacuation paths by using the recovery information. Therefore, the evacuation prediction system 100 in the present example embodiment may estimate the time required for disaster victims to evacuate in accordance with the conditions and others of a road network and other paths that serve as the evacuation paths.

When a disaster occurs, various recovery plans, such as determining a sequence of recovery for trouble occurrence sites and carrying out recovery work for a plurality of trouble occurrence sites at the same time, are assumed to be made. The evacuation prediction system 100 in the present example embodiment may predict the time required for evacuees to evacuate for each of such different recovery plans. Therefore, the evacuation prediction system 100 in the present example embodiment may obtain a recovery plan that may enable the time required for the evacuees to evacuate to satisfy a predetermined condition by predicting the time required for the evacuees to evacuate for each of the different recovery plans. The predetermined conditions in this case include, for example, a condition for completing an evacuation within a predetermined period of time, a condition that may minimize the time required for evacuation among feasible recovery plans, or other conditions. In other words, the evacuation prediction system 100 in the present example embodiment may also be used as a system for determining a recovery plan.

### (Second Example Embodiment)

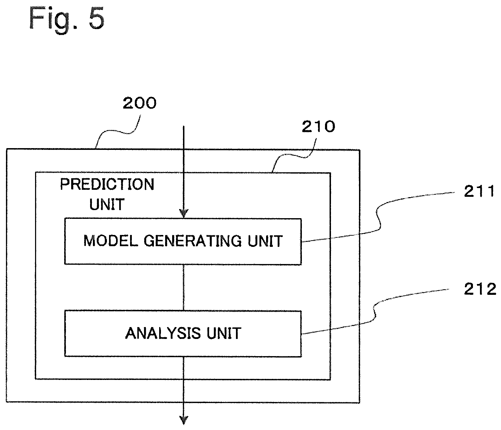

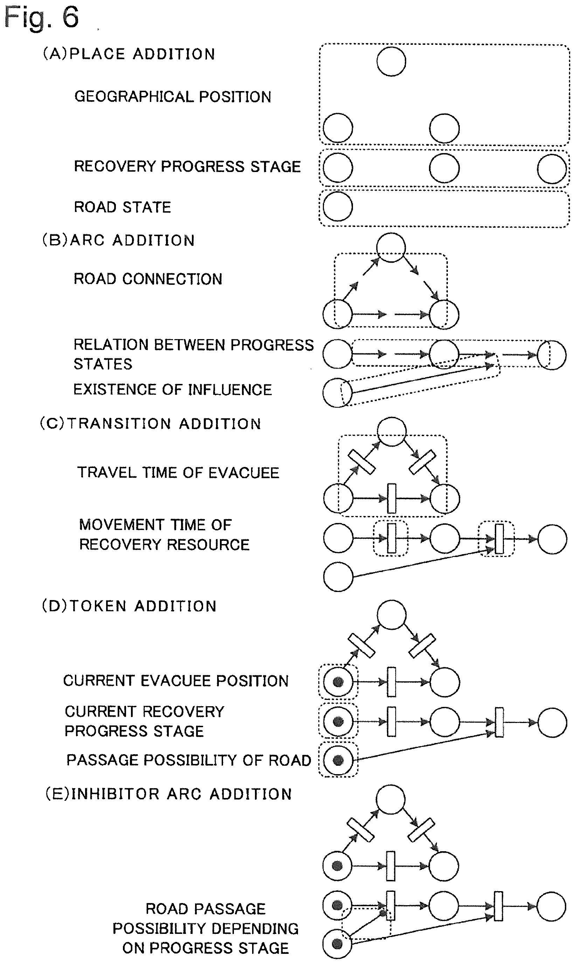

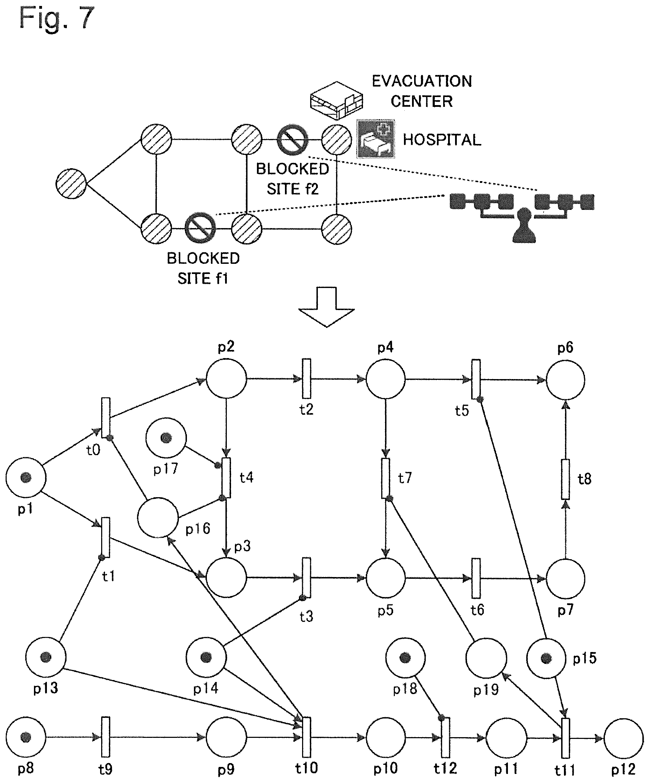

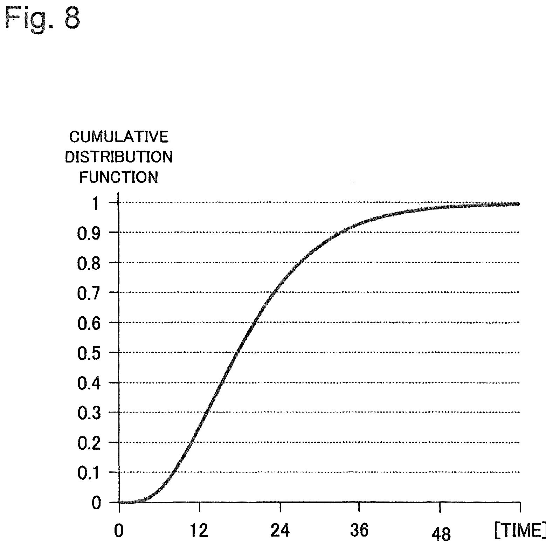

Next, a second example embodiment of the present invention will be described. Fig. 5 is a diagram illustrating a configuration of an evacuation prediction system in the second example embodiment of the present invention. Fig. 6 is a diagram illustrating an example of generation rules that are used when the evacuation prediction system in the second example embodiment of the present invention generates a model. Fig. 7 is a diagram illustrating an example of a model that the evacuation prediction system in the second example embodiment of the present invention generates. Fig. 8 is a diagram illustrating an example of a cumulative distribution function that represents the time required for evacuees to evacuate, which is predicted by the evacuation prediction system in the second example embodiment of the present invention.

As illustrated in Fig. 5, a prediction unit 210 of an evacuation prediction system 200 in the second example embodiment of the present invention includes a model generating unit 211 and an analysis unit 212. The model generating unit 211 generates a model that includes a relation between evacuation paths and recovery timing based on evacuation information and recovery information. The analysis unit 212 predicts time required for evacuees to evacuate using the model generated by the model generating unit 211. The evacuation prediction system 200 in the present example embodiment is different from the evacuation prediction system 100 in the first example embodiment of the present invention with regard to the above-described feature. The evacuation prediction system 200 in the present example embodiment may have the same configuration as that of the evacuation prediction system 100 in the first example embodiment of the present invention, with regard to features other than the above.

The model generating unit 211 generates a model that includes a relation between the evacuation paths and the recovery timing based on the evacuation information and the recovery information, as described above. The model generated by the model generating unit 211 represents, for example, a position of evacuees, the evacuation paths and the capacities thereof, the time required to pass each evacuation path, the time required for the evacuees to move, a trouble occurred in the evacuation paths and the status of recovery therefrom, the time required for recovery from the trouble, and other information. The model that the model generating unit 211 generates may appropriately include information other than the above depending on the conditions of the evacuees and the trouble.

In the evacuation prediction system 200 of the present example embodiment, a stochastic time Petri net (hereinafter referred to as "sTPN") is used as an example of a model generated by the model generating unit 211.

As an example, an sTPN is represented as a tuple <P, T, A-, A+, A·, m0, EFT, LFT, F, C, E, L>. The respective elements of the tuple are represented by a predetermined drawing (not illustrated). P is a set of places. In a drawing illustrating an sTPN, a place is represented by an unfilled circle. T is a set of transitions. In a drawing illustrating an sTPN, a transition is represented by an unfilled rectangle or a bar. A-denotes input arcs each of which connects a place and a transition in a direction from the place to the transition. A+ denotes output arcs each of which connects a place and a transition in a direction from the transition to the place. In the following description, input arcs and output arcs may be simply referred to as arcs in a collective manner. In a drawing illustrating an sTPN, an arc is represented by an arrow. A· denotes inhibitor arcs each of which connects a place and a transition in a direction from the place to the transition. In a drawing illustrating an sTPN, an inhibitor arc is represented by an arrow with a circular tip.

In addition, m0 is an initial marking representing the non-negative numbers of tokens at the respective places. In a drawing illustrating an sTPN, a token is represented by a black dot placed inside a place. EFT and LFT respectively are earliest firing time and latest firing time at the respective transitions included in T, respectively. EFT is a non-negative real number including zero. LFT is a non-negative real number, including zero and infinity. A value of LFT is equal to or larger than a corresponding value of EFT. F denotes cumulative distribution functions of firing times of the respective transitions included in T. The firing times are located between EFT and LFT.

C denotes weights each of which, represents the probability of firing relating to one of a plurality of transitions that are enabled when the plurality of transitions are enabled simultaneously. C is assigned to transitions that may be enabled simultaneously. E denotes enabling functions that are associated with markings for the respective transitions included in T. L (flushing functions) is assigned to transitions. When a transition to which L is assigned fires, a token in a place related with the transition by L is/are flushed regardless of whether the place has a connection relation by an arc with the transition.

A transition is assumed to be firable when the following conditions are satisfied. When the transition fires, a token is removed from a place connected to the transition via an input arc, and a token is added to a place connected to the transitions via an output arc.
- One or more tokens exist in all the places connected to the transition via input arcs.
- No token exists in any of the places connected to the transition via inhibitor arcs.
- The time is larger than the value of EFT and smaller than the value of LFT.
- An associated enabling function becomes true.

Details of the sTPN are described in, for example, "Vicario, E., Sassoli, L., and Carnevali, L. (2009) 'Using stochastic state classes in quantitative evaluation of dense-time reactive systems', IEEE Transactions on Software Engineering, Vol. 35, No. 5, pp. 703-719." and other references.

In one example, the model generating unit 211, represents, using an sTPN and based on an example of generation rules illustrated in Fig. 6, the evacuation information, the recovery information, a relation between the evacuation information and the recovery information, and other information as a model. The model generating unit 211 generates a model so that the model represents geographical positions at which evacuees may stay, a state of roads to be recovered, progress states of recovery, and other information. When an sTPN is used, the model generating unit 211 represents the above items as places, as illustrated in Fig. 6 (A).

The model generating unit 211 generates the model in such a way that the model also represents connection relations such as roads between the above-described geographical positions, whether t passage is influenced by the state of a road and other paths that are to be recovered, relations among the progress states of recovery at a plurality of trouble occurrence sites, and other information. When an sTPN is used, the model generating unit 211 represents the above items as arcs that are appropriately connected to the places described above, as illustrated in Fig. 6 (B).

The model generating unit 211 generates the model in such a way that the model also represents travel time of the evacuees, the time required to recover the trouble occurrence site, movement time of a recovery resource for recovering the trouble occurrence site, and information. The model generating unit 211 may generate the model in such a way that the model represents probability distributions of the respective periods of time described above. When an sTPN is used, the model generating unit 211 represents the above periods of time as transitions, as illustrated in Fig. 6 (C). Each period of time described above is represented by a earliest firing time, a latest firing time, a cumulative distribution function, and others that are associated with a corresponding transition.

The model generating unit 211 generates the model in such a way that the model also represents a position of the evacuees, a progress stage of recovery, whether or not roads and other paths that serve as the evacuation paths are passable, and other information at a desirable point of time. When an sTPN is used, the model generating unit 211 represents the above items by adding a token to a place corresponding to each position or situation, as illustrated in Fig. 6 (D).

The model generating unit 211 generates the model in such a way that the model also represents whether the roads that serve as the evacuation paths are passable and changes in the capacities thereof depending on progress stages of recovery relating to the trouble occurrence site. When an sTPN is used, the model generating unit 211 represents the above items by adding an inhibitor arc to a transition representing the progress state of recovery, as illustrated in Fig. 6 (E). As another example, when an evacuation path exists that a plurality of evacuees are unable to pass at the same time, the model generating unit 211 generates a model that represents a constraint such that while an evacuee is passing the evacuation path, other evacuees are unable to pass the evacuation path. When an sTPN is used, the model generating unit 211 may represents such information by adding an inhibitor arc appropriately to a place corresponding to the entrance of the evacuation path and disabling a transition representing a movement of other evacuees from firing, for example. When an sTPN is used, the model generating unit 211 may also represents such information by using an enabling function.

The model generating unit 211 may store the above-described generation rules in a storage unit, which is not illustrated, in advance and generate a model referring to the generation rules when generating the model. Alternatively, the model generating unit 211 may acquire the generation rules from the outside as needed basis to generate the model when generating a model.

By using the generation rules as described above, the model generating unit 211 may generate a model that includes the evacuation information, the recovery information, and the relation between the evacuation path and the recovery timing.

Fig. 7 illustrates an example of a model that the model generating unit 211 generates. The model illustrated in Fig. 7 represents the evacuation paths and others illustrated in Fig. 2 by an sTPN. In the example illustrated in Fig. 7, f1 is assumed to be recovered among the trouble occurrence sites. In the model illustrated in Fig. 7, areas at which the evacuees may stay, including a disaster-stricken area and an evacuation destination, are represented by places p1 to p7. The progress stages of recovery and the states of the roads are represented by places p8 to p19.

In addition, in the model illustrated in Fig. 7, connection relations of the roads that connect the areas including the disaster-stricken area and the evacuation destination, are represented by transitions t0 to t8 and arcs that connect the transitions and the places p1 to p7. In other words, by the places p1 to p7, the transitions t0 to t8, and the arcs connecting the places and the transitions, the evacuation paths illustrated in Fig. 2 are indicated. The sTPN is configured so that each of the transitions t0 to t8 is enabled when a road corresponding to the transition is passable and disabled when the road is impassable or is not used as an evacuation path. Moreover, the time required for the evacuees to move and probability distributions thereof are appropriately represented by earliest firing times, latest firing times, cumulative distribution functions, and other timing information of the transitions t0 to t8.

In addition, the time required for recovery work, the time required for the resource for recovery to move, probability distributions thereof, and the like are appropriately represented by earliest firing times, latest firing times, cumulative distribution functions, and other timing information of the transitions t9 to t12. In the model illustrated in Fig. 7, t10 is associated with f1, which is a trouble occurrence site.

The position of the evacuees and the status of recovery are represented by tokens. In an initial state (initial marking), assuming that the evacuees stay at the disaster-stricken area, a token is distributed in the place p1, which corresponds to the disaster-stricken area. Moreover, assuming that recovery of the trouble occurrence sites has not been started, a token is placed in the place p8. In addition to the above, tokens are distributed in places corresponding to the afore-described states. The sTPN illustrated in Fig. 7 represents the initial state.

In addition, the arcs that connect the places p13 to p19 and the transitions t0 to t8 represent situations in which the states of roads to be recovered and the like influence passage thereof depending on progress stages of recovery and whether passage thereof is possible depending on progress stages of recovery. In this case, the arcs include an inhibitor arcs.

The model illustrated in Fig. 7 is generated so as to represent that evacuation is carried out using one of the evacuation routes illustrated in Fig. 2 in accordance with the status of recovery at the trouble occurrence sites. Specifically, the model is generated so that the transition t0 become enabled to cause the route 1→2→4→5 illustrated in Fig. 2 to be selected at a point of time before f1 is recovered (before the transition t10 fires). The model is generated so that the transition t1 becomes enabled to cause the route 1→13→15 illustrated in Fig. 2 to be selected at a point of time after f1 has been recovered (after the transition t10 has fired). The model is also generated so that the transition t4 is enabled to cause the route 2→3 illustrated in Fig. 2 not to be selected. In other words, the model generating unit 211 generates a model so that an evacuation route is selected in accordance with the status of recovery at a trouble occurrence site. As described above, generating a model in which an evacuation route is selected in accordance with the status of recovery at a disaster occurrence site enables the analysis unit 212, which will be described later, to predict the time required for the evacuees to evacuate in accordance with the status of recovery on evacuation routes.

The model generating unit 211 may generate a model different from the above-described model with respect to evacuation routes. In other words, when a plurality of passable routes exist, the model generating unit 211 may generate a model that sets the respective routes to be passable. The model generating unit 211 may appropriately generate a model so that a passable evacuation route is selected in accordance with the situation of evacuation.

The analysis unit 212 predicts the time required for the evacuees to evacuate using a model. The analysis unit 212 predicts the time required for the evacuees to evacuate by carrying out, for example, a state exploration from an initial state to a state representing that the evacuees reach the evacuation destination, with respect to a model generated by the model generating unit 211. When a model using an sTPN is generated as a model, the analysis unit 212 uses, for example, the time required for a token to reach a place representing the evacuation destination from an initial state (a state in which the token is distributed in a place representing the evacuation origin) as the time required for the evacuees to evacuate. When obtaining the above-described time, the analysis unit 212 may use any state exploration algorithm for an sTPN, including known methods.

The time required for the evacuees to evacuate may be represented in any various forms. When an sTPN is used as a model, the time required for the evacuees to evacuate is represented by using a cumulative distribution function as a probability distribution of the time at which evacuation is completed, for example. Fig. 8 illustrates an example of a cumulative distribution function that represents the time required for the evacuees to evacuate. In the example illustrated in Fig. 8, the horizontal axis represents elapsed time from the start of evacuation and the vertical axis represents values of the cumulative distribution function. In this example, it is evident that over approximately 70 percent of the evacuees complete evacuation 24 hours after the start of evacuation and substantially all the evacuees complete evacuation 48 hours after the start of evacuation.

As described thus far, in the evacuation prediction system 200 in the present example embodiment, the model generating unit 211 generates a model that includes a relation between the evacuation paths and recovery timing. The analysis unit 212 predicts the time required for the evacuees to evacuate using the model. When a disaster occurs, the time required for evacuation may vary depending on evacuation routes. The model that includes a relation between the evacuation paths and recovery timing can represent, for example, a situation in which an evacuation route to be used is changed depending on the status of recovery at a trouble occurrence site. By analyzing such a model, it is possible to predict the time required for the evacuees to evacuate in accordance with the status of recovery of an evacuation path. Therefore, the evacuation prediction system 200 in the present example embodiment may estimate, as with the evacuation prediction system 100 in the first example embodiment of the present invention, the time required for disaster victims to evacuate in accordance with conditions of a road network and the like that serve as the evacuation paths.

In the present example embodiment, the prediction unit 210 used an sTPN as a model. However, models used by the prediction unit 210 are not limited to an sTPN. As long as being able to generate a model based on the above-described generation rules, the model generating unit 211 may generate a model in a form other than an sTPN. The model generating unit 211 may also generate a model with evacuation information including the capacities of the evacuation paths and the like and recovery information, for example, appropriately by using a method different from the above-described method depending on a model to be used. The analysis unit 212 may predict the time required for the evacuees to evacuate by analyzing the model generated in a form other than an sTPN by using a method suitable for the model.

In the present example embodiment, even when an sTPN is used as a model, the model generating unit 211 may generate the model by using a rule different from the above-described generation rules. In one example, the model generating unit 211 may generate the model by using a rule different from the above-described generation rules, such as a rule of not using any inhibitor arc when modeling whether or not roads are passable depending on progress stages of recovery relating to a trouble occurrence site.

In the present example embodiment, each of the model generating unit 211 and the analysis unit 212 included in the prediction unit 210 may be configured as a single device. In this case, the model generating unit 211 and the analysis unit 212 are interconnected via a wired or wireless communication network, for example. The model generating unit 211 and the analysis unit 212 may exchange data representing a model with each other via a file.

The present invention was described above through example embodiments thereof, but the present invention is not limited to the above example embodiments. Various modifications that could be understood by a person skilled in the art may be applied to the configurations and details of the present invention within the scope of the present invention. The configurations in the respective example embodiments may be combined with one another without departing from the scope of the present invention.

This application claims priority based upon Japanese Patent Application No. 2014-231389, filed on Nov. 14, 2014, the entire disclosure of which is incorporated herein by reference.

### [Reference signs List]

- 100, 200: Evacuation prediction system
- 110,210: Prediction unit
- 211: Model generating unit
- 212: Analysis unit
- 500: Information processing device
- 501: CPU
- 502: ROM
- 503: RAM
- 504: Program
- 505: Storage device
- 506: Storage medium
- 507: Drive device
- 508: Communication interface
- 509: Communication network
- 510: Input-output interface
- 511: Bus

## Claims

1. An evacuation prediction system, comprising:
prediction means for predicting time required for an evacuee to evacuate based on evacuation information relating to an evacuation route for the evacuee and recovery information relating to recovery timing at a trouble occurrence site that is a site where a trouble occurred on the evacuation route.

2. The evacuation prediction system according to claim 1, wherein
the prediction means includes:
model generating means for generating a model including a relation between the evacuation route and the recovery timing based on the evacuation information and the recovery information; and
analysis means for predicting the time required for the evacuee to evacuate by using the model.

3. The evacuation prediction system according to claim 2, wherein
the model generating means generates the model in such a way that an evacuation route for the evacuee is selected in accordance with a recovery status at the site where the trouble occurred.

4. The evacuation prediction system according to claim 2 or 3, wherein
the model generating means generates the model that represents at least one of time required for the evacuee to move and time related to recovery at the trouble occurrence site by means of a probability distribution.

5. The evacuation prediction system according to any one of claims 2 to 4, wherein
the prediction means predicts a distribution of the time required for the evacuee to evacuate.

6. The evacuation prediction system according to any one of claims 1 to 5, wherein
the model is represented by a stochastic time Petri net.

7. A model generating device, comprising
model generating means for generating a model including a relation between the evacuation route and the recovery timing based on the evacuation information and the recovery information.

8. A prediction device, comprising
analysis means for predicting time required for an evacuee to evacuate by using a model including a relation between an evacuation route and recovery timing.

9. An evacuation prediction method, comprising,
predicting time required for an evacuee to evacuate based on evacuation information relating to an evacuation route for the evacuee and recovery information relating to recovery timing at a trouble occurrence site that is a site where a trouble occurred on an evacuation route.

10. The evacuation prediction method according to claim 9, further comprising:
in predicting the time required for the evacuee to evacuate,
generating a model including a relation between the evacuation route and the recovery timing based on the evacuation information and the recovery information; and
predicting the time required for the evacuee to evacuate by using the model.

11. A computer-readable recording medium storing a program, the program causing a computer to execute:
a process of predicting time required for an evacuee to evacuate based on evacuation information relating to an evacuation route for the evacuee and recovery information relating to recovery timing at a trouble occurrence site that is a site where a trouble occurred on an evacuation route.

12. The computer-readable recording medium storing a program according to claim 11, the program further causing the computer to execute:
in the process of predicting the time required for the evacuee to evacuate,
a process of generating a model including a relation between the evacuation route and the recovery timing based on the evacuation information and the recovery information; and
a process of predicting the time required for the evacuee to evacuate by using the model.
